# EUROPÄISCHE PATENTSCHRIFT

(11) **EP 1 108 944 B1**
(45) Veröffentlichungstag und Bekanntmachung des Hinweises auf die Patenterteilung: **15.09.2004**
(21) Anmeldenummer: 00125660.1
(22) Anmeldetag: 23.11.2000
(51) Int. Cl.: F16L 55/10, F25D 15/00

(54) **Einfrierkopf für Rohreinfriergeräte**
Freezing head for pipe freezing devices
Tête de congélation pour dispositifs de congélation de tuyaux

(30) Priorität: 13.12.1999 DE 19960126
(43) Veröffentlichungstag der Anmeldung: 20.06.2001
(73) Patentinhaber: REMS-WERK Christian Föll und Söhne GmbH & Co, 71332 Waiblingen (DE)
(72) Erfinder: Wagner, Rudolf, Dr., 70376 Stuttgart (DE)
(74) Vertreter: Kohl, Karl-Heinz, Dipl.-Ing.

(56) Entgegenhaltungen:
- DE-A- 19 617 619

## Beschreibung

Die Erfindung betrifft einen Einfrierkopf für Rohreinfriergeräte nach dem Oberbegriff des Anspruches 1.

Solche Einfrierköpfe werden dazu verwendet, den Inhalt eines Rohres, beispielsweise eines Heizungsrohres, einzufrieren, um das Rohr beispielsweise zu reparieren oder einzelne Rohrabschnitte auszutauschen. Der Einfrierkopf ist zum Anlegen an das Rohr mit einer Vertiefung versehen, deren Boden flächig am Rohr anliegt. Das in den Einfrierkopf eingebrachte Kühlmittel verdampft, wodurch Wärme aus dem Rohr abgezogen und dessen Inhalt zum Gefrieren gebracht wird.

Bei einem bekannten Einfrierkopf (DE 196 17 619 C2) sind am Umfang mehrere Vertiefungen vorgesehen, die durch flügelartige Stege voneinander getrennt sind, die sich von einem zentralen Bereich des Einfrierkopfes aus radial nach außen erstrecken. Die Böden der Vertiefungen haben unterschiedliche Krümmungsradien, so daß der Einfrierkopf mit der jeweiligen Vertiefung auf das entsprechende Rohr aufgesetzt werden kann. Durch die flügelartigen Stege hat der Einfrierkopf einen aufwendigen Aufbau. Zudem sind die radial verlaufenden Stege, insbesondere wenn die Vertiefungen verhältnismäßig tief sind, schmal ausgebildet, so daß die Gefahr besteht, daß diese Stege beschädigt werden.

Der Erfindung liegt die Aufgabe zugrunde, den gattungsgemäßen Einfrierkopf so auszubilden, daß er kompakt ausgebildet ist, eine hohe Stabilität aufweist und dennoch für unterschiedliche Rohre eingesetzt werden kann.

Diese Aufgabe wird beim gattungsgemäßen Einfrierkopf erfindungsgemäß mit den kennzeichnenden Merkmalen des Anspruches 1 gelöst.

Beim erfindungsgemäßen Einfrierkopf sind die Böden der Vertiefungen jeweils mit zwei unterschiedlich gekrümmten Bodenabschnitten versehen. Entsprechend den unterschiedlichen Krümmungsradien der Bodenabschnitte können in die Vertiefungen Rohre unterschiedlichen Durchmessers eingesetzt werden. Da die Vertiefungen an verschiedenen Außenseiten des Einfrierkopfes vorgesehen sind, vorzugsweise an einander gegenüberliegenden Außenseiten, ist der erfindungsgemäße Einfrierkopf kompakt ausgebildet. Insbesondere weist er keine flügelartigen Stege auf, die leicht beschädigt werden können. Dadurch hat der Einfrierkopf auch eine hohe Festigkeit, die ihn besonders für den rauhen Einsatz auf Baustellen hervorragend geeignet macht.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen.
- Fig. 1: in Seitenansicht einen erfindungsgemäßen Einfrierkopf,
- Fig. 2: eine Seitenansicht einer Schale des Einfrierkopfes gemäß Fig. 1,
- Fig. 3: einen Schnitt längs der Linie III-III in Fig. 2,
- Fig. 4: einen Schnitt längs der Linie IV-IV in Fig. 2,
- Fig. 5: in Seitenansicht einen Deckel des erfindungsgemäßen Einfrierkopfes,
- Fig. 6 bis Fig. 8: verschiedene Einsätze für den Einfrierkopf.

Der Einfrierkopf ist Teil eines Rohr-Einfriergerätes, mit dem der Rohrinhalt, üblicherweise Wasser, eingefroren werden kann. Hierzu werden zwei Einfrierköpfe am Rohr befestigt. An die Einfrierköpfe sind Leitungen angeschlossen, welche die Einfrierköpfe mit einem Kühlgerät verbinden, das üblicherweise einen Kompressor, Kondensoren und Gebläse aufweist. Im Kühlsystem läuft unter Druck ein Kühlmittel um, das über die Leitungen in die Einfrierköpfe eingeführt wird. Das unter hohem Druck stehende flüssige Kühlmittel wird über ein dünnes, kapillarartiges Rohr in die Einfrierköpfe eingeführt. Beim Austritt aus diesem dünnen Kapillarrohr verdampft das Kühlmittel, wodurch Wärme aus dem benachbarten Bereich des einzufrierenden Rohres absorbiert wird. Dies führt dazu, daß der Rohrinhalt gefriert. Der Kühlmitteldampf wird über ein das kapillarartige Rohr umgebendes Außenrohr der Leitungen zum Kühlgerät abgezogen und dem Kompressor zugeführt, in dem der Kühlmitteldampf verdichtet wird. Der unter hohem Druck stehende Kühlmitteldampf wird mit Hilfe des Kondensators und gegebenenfalls des Gebläses gekühlt und dadurch in die flüssige Phase zurückgeführt. Das flüssige Kühlmittel wird dann erneut in der beschriebenen Weise den Einfrierköpfen zugeführt. Die Verfahrensweise dieses Kühlsystems ist bekannt und wird darum nicht näher erläutert.

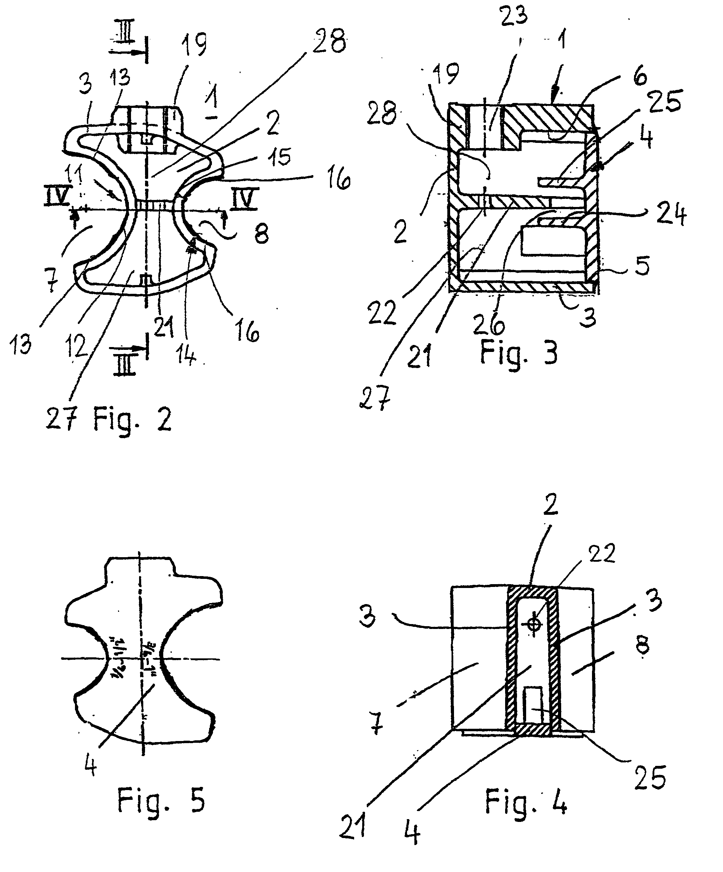

Der Einfrierkopf hat eine Schale 1, die einen Boden 2 aufweist, an den senkrecht eine umlaufende Seitenwand 3 anschließt. Die Schale 1 wird durch einen Deckel 4 geschlossen, der gleiche Umrißform wie die Schale 1 hat. Wie Fig. 3 zeigt, liegt der Deckel 4 mit seinem umlaufenden Rand 5 zumindest über einen Teil seiner Höhe an der Innenwand 6 der schalenseitigen Seitenwand 3 an. Die Schale 1 und der Deckel 4 sind vorteilhaft miteinander verschweißt und bestehen aus gut wärmeleitendem Material, wie Metall.

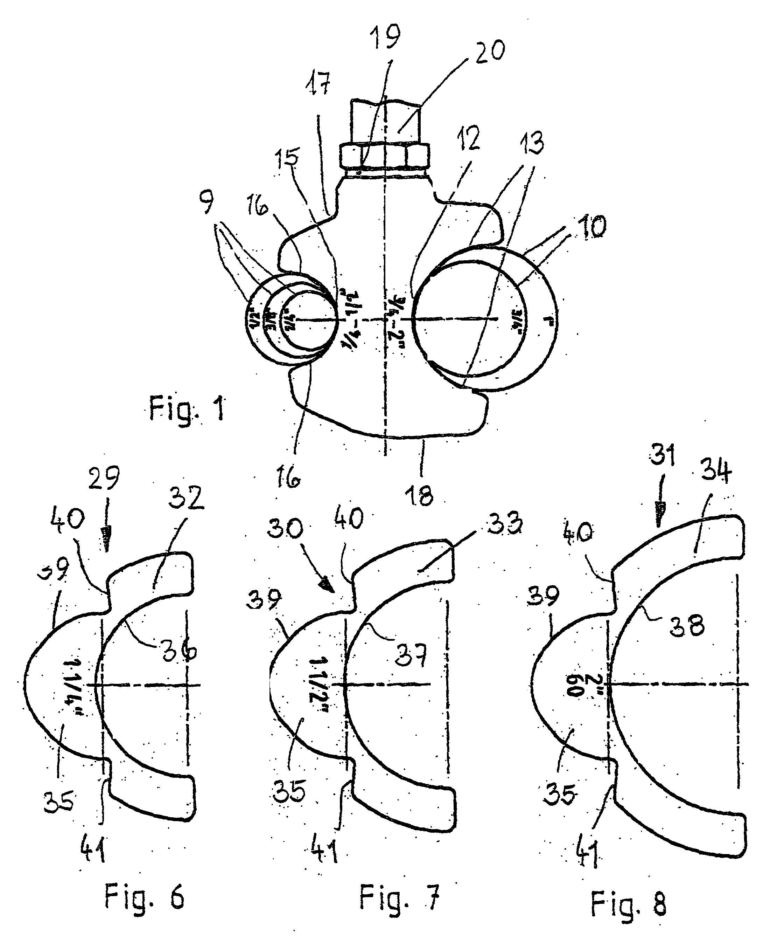

Der Einfrierkopf weist an zwei einander gegenüberliegenden Längsseiten jeweils eine rinnenförmige Vertiefung 7 und 8 auf, in die die zu gefrierenden Rohrabschnitte 9 und 10 (Fig. 1) eingreifen. Die Vertiefung 7 hat einen gekrümmt verlaufenden Boden 11, der aus zwei unterschiedlich gekrümmten Bodenabschnitten 12 und 13 besteht. Der zentrale Bodenabschnitt 12 hat kleineren Krümmungsradius als der daran anschließende Bodenabschnitt 13. Im Beispielsfall ist der zentrale Bodenabschnitt 12 mit einem einem ¾"-Rohr entsprechenden Radius gekrümmt. Darum kann der Einfrierkopf mit der Vertiefung 7 auch auf ein Rohr mit einem Durchmesser von ¾" aufgesetzt werden. Der Einfrierkopf liegt dann mit dem Bodenabschnitt 12 flächig am entsprechenden Rohr 10 (Fig. 1) an. Die in Krümmungsrichtung gemessene Breite des Bodenabschnittes 12 ist so gewählt, daß der Inhalt des Rohres 10 innerhalb kurzer Zeit zuverlässig eingefroren werden kann.

Der Einfrierkopf kann mit der Vertiefung 7 auch auf ein im Durchmesser größeres Rohr 10 aufgesetzt werden. Im Beispielsfall gemäß Fig. 1 hat dieses größere Rohr einen Durchmesser von einem Zoll. In diesem Falle liegt der Einfrierkopf mit dem Bodenabschnitt 13 flächig am Umfang des im Durchmesser größeren Rohres 10 an. Es versteht sich, daß der Bodenabschnitt 13 aus zwei an den Bodenabschnitt 12 anschließenden Bereichen besteht, die auf einem gemeinsamen gedachten Kreisbogen bzw. Zylindermantel liegen. Der Bodenabschnitt 13 ist in Krümmungsrichtung ebenfalls so lang, daß ein rascher Wärmeübergang vom Einfrierkopf zum Rohr 10 gewährleistet ist.

Die gegenüberliegende Vertiefung 8 hat ebenfalls einen Boden 14 mit zwei unterschiedlich gekrümmten Bodenabschnitten 15 und 16. Der Bodenabschnitt 15 ist zentral in der Vertiefung 8 vorgesehen und hat kleineren Krümmungsradius als die anschließenden Bodenabschnitte 16. Die Krümmungsradien der Bodenabschnitte 15 und 16 sind darüber hinaus kleiner als die Krümmungsradien der Bodenabschnitte 12, 13 der gegenüberliegenden Vertiefung 7.

Wie Fig. 1 beispielhaft zeigt, kann der Einfrierkopf mit der Vertiefung 8 auf ein Rohr mit einem Durchmesser von ¼" aufgesetzt werden. In diesem Falle liegt der Einfrierkopf mit dem Bodenabschnitt 15 flächig an diesem Rohr an. Mit den Bodenabschnitten 16, die an beiden Seiten des Bodenabschnittes 15 anschließen und auf einem gemeinsamen gedachten Kreisbogen bzw. Zylindermantel liegen, kann der Einfrierkopf auf ein im Durchmesser größeres Rohr 9 aufgesetzt werden, das beispielsweise einen Durchmesser von ½" haben kann. Auf jeden Fall ist durch die jeweils auf Kreisbögen liegenden Bodenabschnitte 15, 16 gewährleistet, daß der Einfrierkopf flächig am jeweiligen Rohr 9 anliegt.

Die beiden Vertiefungen 7, 8, die an einander gegenüberliegenden Längsseiten des Einfrierkopfes vorgesehen sind, weisen im dargestellten Ausführungsbeispiel jeweils zwei unterschiedlich gekrümmte Bodenabschnitte 12, 13 und 15, 16 auf. Es ist ohne weiteres möglich, die eine oder andere Vertiefung oder auch beide Vertiefungen 7, 8 mit mehr als zwei unterschiedlich gekrümmten Bodenabschnitten zu versehen. Dann kann der Einfrierkopf auf eine entsprechende Zahl von im Durchmesser unterschiedlichen Rohren aufgesetzt werden. Da die verschiedenen Bodenabschnitte jeder Vertiefung 7, 8 jeweils auf gedachten Kreisbogen liegen, liegt der Einfrierkopf an dem jeweiligen Rohr 9, 10 flächig an, so daß ein optimaler Wärmeübergang sichergestellt ist. Da der Einfrierkopf nur jeweils eine Vertiefung 7, 8 auf jeder Längsseite aufweist, hat er eine sehr kompakte Bauform. Der Einfrierkopf kann darum auch an beengten Stellen auf die Rohre aufgesetzt werden. Trotz dieser kompakten Ausbildung kann der Einfrierkopf aufgrund der unterschiedlich gekrümmte Bodenabschnitte 12, 13; 15, 16 aufweisenden Vertiefungen 7, 8 optimal auf im Durchmesser unterschiedlich große Rohre 9, 10 aufgesetzt werden.

An die Längsseiten des Einfrierkopfes schließen Schmalseiten 17 und 18 an, die gemäß Fig. 1 entgegengesetzt zueinander geneigt angeordnet sind. Die Schmalseiten 17, 18 divergieren von der die Vertiefung 8 aufweisenden Längsseite in Richtung auf die die Vertiefung 7 aufweisende Längsseite. Diese schräge Lage der Schmalseiten 17, 18 zu den Längsseiten trägt zu einer kompakten Bauform und einfachen Handhabbarkeit bei. Aufgrund dieser Schräglage der Schmalseiten 17, 18 ist der Einfrierkopf im Bereich der kleineren Vertiefung 8, die zur Aufnahme der im Durchmesser kleineren Rohre dient, schmaler als an der gegenüberliegenden Seite.

Die Schmalseite 17 weist einen Anschluß 19 auf, über den eine Leitung 20 (Fig. 1) für das Kühlmedium angeschlossen wird. Sie enthält in bekannter Weise ein kapillarförmiges Innenrohr, über das das Kühlmittel in den Einfrierkopf eingeführt wird, sowie ein Außenrohr, welches das Innenrohr umgibt und in welchem der Kühlmitteldampf aus dem Einfrierkopf zurück zum Kühlgerät transportiert wird.

Die beiden Vertiefungen 7, 8 liegen an den beiden Längsseiten des Einfrierkopfes einander gegenüber. Dadurch hat der Einfrierkopf im Bereich zwischen den tiefsten Stellen der Vertiefungen 7, 8 seine geringste Breite (Fig. 1, 2 und 5). Vorteilhaft hat die Seitenwand 3 über ihren Umfang konstante Stärke. Lediglich im Bereich des Anschlusses 19 ist die Seitenwand 3 verbreitert ausgebildet. Um einen optimalen Wärmeübergang zum Rohr 9, 10 zu gewährleisten, ist die Seitenwand 3 vorteilhaft dünnwandig ausgebildet. Es ist selbstverständlich möglich, daß die Seitenwand 3 über ihren Umfang auch unterschiedliche Dicke hat. Hierbei ist es von Vorteil, wenn die Seitenwand im Bereich der Böden 11, 14 dünnwandig ausgebildet ist, um einen guten Wärmeübergang zu ermöglichen. Im übrigen Bereich kann die Seitenwand 3 eine größere Wandstärke haben.

Die unterschiedlich gekrümmten Bodenabschnitte 12, 13; 15, 16 sind in der Seitenwand 3 der Schale 1 vorgesehen. Die Vertiefungen 7, 8 erstrecken sich über die gesamte Höhe der Seitenwand 3.

Im Bereich der tiefsten Stellen der beiden Vertiefungen 7, 8 sind die einander gegenüberliegenden Seitenwände durch einen Quersteg 21 miteinander verbunden. Wie Fig. 3 zeigt, erstreckt sich der Quersteg 21 vom Boden 2 der Schale 1 aus senkrecht in Richtung auf den Deckel 4. Nahe dem Boden 2 ist der Quersteg 21 mit einer Durchgangsöffnung 22 versehen, deren Achse fluchtend zur Achse der Durchgangsöffnung 23 im Anschluß 19 liegt. Die im Quersteg 21 vorgesehene Durchgangsöffnung 22 hat einen wesentlich kleineren Durchmesser als die Durchgangsöffnung 23 des Anschlusses 19, da durch die Durchgangsöffnung 22 lediglich das kapillarförmige Rohr (nicht dargestellt) zur Zuführung des unter Druck stehenden flüssigen Kühlmittels dient. Der Quersteg 21 endet mit Abstand vom Deckel 4 (Fig. 3). Von der Innenseite des Deckels 4 stehen zwei Stege 24 und 25 senkrecht ab, die mit Abstand beiderseits des Quersteges 21 liegen und ihn übergreifen, quer zur Längserstreckung der Stege gesehen (Fig. 3). Dadurch wird zwischen dem Quersteg 21 und den dekkelseitigen Stegen 24, 25 ein labyrinthartiger Durchgang 26 gebildet, über den das dampfförmige Kühlmedium aus einer Kammer 27 in eine Kammer 28 strömen kann. Das flüssige Kühlmedium wird über das Kapillarrohr in die Kammer 27 eingebracht, die durch den Quersteg 21 von der Kammer 28 getrennt ist, in welche der Anschluß 19 mündet. Da das unter Druck stehende flüssige Kühlmedium beim Austritt aus dem Kapillarrohr in der Kammer 27 verdampft, strömt der Kühlmitteldampf über den Durchgang 26 in die Kammer 27, aus der er über das (nicht dargestellte) Außenrohr der Leitung 20 abgesaugt wird. Der Quersteg 21, der im zentralen Bereich des Einfrierkopfes vorgesehen ist, verleiht ihm eine hohe Festigkeit. Die Stege 24, 25 haben in Ansicht rechteckigen Umriß (Fig. 4) und sind als schmale Zungen ausgebildet, die vorteilhaft einstückig mit dem plattenartigen Deckel 4 ausgebildet sind.

Der Quersteg 21 mit dem labyrinthartigen Durchgang 26 trägt zu einer optimalen Verdampfung des Kühlmittels und einer optimalen Kühlung bei. Der Kühlmitteldampf kann nicht sofort aus der Kammer 27 in die Kammer 28 gelangen. Er wird durch den Durchgang 26 gestaut und kann darum nur langsam in die Kammer 28 strömen. Auf diese Weise wird, insbesondere auch unabhängig von der Lage des Einfrierkopfes, eine hervorragende Wärmeübertragung gewährleistet.

Die beiden Kammern 27, 28 haben im wesentlichen gleichen Umriß, sind aber spiegelbildlich zueinander vorgesehen (Fig. 2).

Um den Einfrierkopf auch für im Durchmesser größere Rohre verwenden zu können, können in die Vertiefung 7 Einsatzstücke 29 bis 31 eingesetzt werden (Fig. 6 bis 8), die im wesentlichen gleich ausgebildet sind und sich lediglich hinsichtlich ihres Aufnahmeteiles 32 bis 34 voneinander unterscheiden. Jedes Einsatzstück 29 bis 31 hat einen Steckteil 35, der vorteilhaft massiv ausgebildet ist und in seiner Umrißform an die Umrißform der Vertiefung 7 angepaßt ist. Die Steckteile 35 der Einsatzstücke 29 bis 31 sind gleich ausgebildet und liegen in der Gebrauchslage flächig am Boden 11 der Vertiefung 7 an. An den Steckteil 35 schließt der Aufnahmeteil 32 bis 34 an, der bügelförmig ausgebildet ist. Die Innenseiten 36 bis 38 der Aufnahmeteile 32 bis 34 sind teilkreisförmig gekrümmt und erstrecken sich jeweils annähernd über 180°. Die Innenseite 36 hat den kleinsten und die Innenseite 38 den größten Krümmungsradius. Die Krümmungsradien der Innenseiten 36 bis 38 sind so gewählt, daß das Einsatzstück 29 für ein Rohr mit einem Durchmesser von 1 ¼", das Einsatzstück 30 für ein Rohr mit einem Durchmesser von 1 ½" und das Einsatzstück 31 für ein Rohr mit einem Durchmesser von 2" geeignet ist. Der Einfrierkopf liegt mit der Innenseite 36 bis 38 der Aufnahmeteile 32 bis 34 des jeweiligen Einsatzstückes 29 bis 31 flächig am jeweiligen Rohr an. Die Außenseite 39 der Steckteile 35 geht jeweils in eine nach außen sich erstreckende, vorteilhaft ebene Außenseite 40, 41 des Aufnahmeteiles 32 bis 34 über. Mit diesen Außenseiten 40, 41 liegt das Einsatzstück 29 bis 31 an der die Vertiefung 7 aufweisenden Längsseite des Einfrierkopfes an. Durch die Einsatzstücke wird der Einsatzbereich des Einfrierkopfes erweitert. Die Einsatzstücke 29 bis 31 bestehen aus gut wärmeleitendem Material, vorzugsweise aus Metall.

Die Innenseiten 36 bis 38 der Aufnahmeteile 32 bis 34 können entsprechend den Böden 11, 14 der Vertiefungen 7, 8 unterschiedlich gekrümmte Bodenabschnitte haben. Dann können in die Aufnahmeteile 32 bis 34 ebenfalls Rohre unterschiedlichen Durchmessers eingesetzt werden.

Der Einfrierkopf wird beim Einfriervorgang auf dem jeweiligen Rohr 9, 10 mittels (nicht dargestellter) Halter befestigt, die beispielsweise als um das Rohr und den Einfrierkopf zu schlingende Spannbänder ausgebildet sein können. Die einzufrierenden Rohre 9, 10 können aus Stahl, Kupfer, Kunststoff oder aus einem Verbundwerkstoff bestehen.

## Patentansprüche

1. Einfrierkopf für Rohreinfriergeräte, mit wenigstens einer an einer Außenseite vorgesehenen Vertiefung (7, 8) zur Aufnahme eines Rohrabschnittes (9, 10) und mit wenigstens einem Anschluß (19) zur Zuführung eines Kühlmittels in mindestens einen Hohlraum (27, 28) des Einfrierkopfes,
wobei der Einfrierkopf an einer anderen Außenseite wenigstens eine weitere Vertiefung (7, 8) aufweist, **dadurch gekennzeichnet daß** der Boden (11, 14) der Vertiefungen (7, 8) jeweils wenigstens zwei Bodenabschnitte (12, 13; 15, 16) aufweist, die unterschiedlichen Krümmungsradius haben.

2. Einfrierkopf nach Anspruch 1,
**dadurch gekennzeichnet, daß** die Bodenabschnitte (12, 13; 15, 16) ineinander übergehen.

3. Einfrierkopf nach Anspruch 1 oder 2,
**dadurch gekennzeichnet, daß** der eine Bodenabschnitt (12, 15) zentral in den Vertiefungen (7, 8) vorgesehen ist.

4. Einfrierkopf nach einem der Ansprüche 1 bis 3,
**dadurch gekennzeichnet, daß** der andere Bodenabschnitt (13, 16) beiderseits an dem zentralen Bodenabschnitt (12, 15) anschließt und vorteilhaft aus zwei durch den zentralen Bodenabschnitt (12, 15) getrennten Bereichen besteht, die auf einem gedachten Kreisbogen bzw. Zylindermantel liegen.

5. Einfrierkopf nach Anspruch 3 oder 4,
**dadurch gekennzeichnet, daß** der zentrale Bodenabschnitt (12, 15) einen kleineren Krümmungsradius hat als der andere Bodenabschnitt (13, 16).

6. Einfrierkopf nach einem der Ansprüche 1 bis 5,
**dadurch gekennzeichnet, daß** der Einfrierkopf an zwei einander gegenüberliegenden Außenseiten jeweils eine Vertiefung (7, 8) aufweist.

7. Einfrierkopf nach einem der Ansprüche 1 bis 6,
**dadurch gekennzeichnet, daß** der Einfrierkopf eine Schale (1) mit einem Boden (2) aufweist, längs dessen Rand eine quer abstehende, vorteilhaft die Vertiefungen (7, 8) aufweisende Seitenwand (3) vorgesehen ist.

8. Einfrierkopf nach Anspruch 7,
**dadurch gekennzeichnet, daß** die umlaufende Seitenwand (3) den Hohlraum (27, 28) begrenzt.

9. Einfrierkopf nach einem der Ansprüche 1 bis 8,
**dadurch gekennzeichnet, daß** der Hohlraum zwei Kammern (27, 28) aufweist, die durch einen vorteilhaft vom Boden (2) der Schale (1) abstehenden Quersteg (21) wenigstens teilweise voneinander getrennt sind.

10. Einfrierkopf nach Anspruch 9,
**dadurch gekennzeichnet, daß** der Quersteg (21) mit Abstand von einem Deckel (4) endet, der den Hohlraum (27, 28) abschließt.

11. Einfrierkopf nach Anspruch 10,
**dadurch gekennzeichnet, daß** von der Innenseite des Deckels (4) zwei Stege (24, 25) abstehen, die den Quersteg (21) mit Abstand übergreifen, und daß vorteilhaft zwischen dem Quersteg (21) und den Stegen (24, 25) des Deckels (4) ein labyrinthartiger Durchgang (26) gebildet ist.

12. Einfrierkopf nach einem der Ansprüche 9 bis 11,
**dadurch gekennzeichnet, daß** der vorteilhaft zwischen den einander gegenüberliegenden Vertiefungen (7, 8) sich erstreckende Quersteg (21) eine Öffnung (22) zur Durchführung eines das Kühlmittel zuführenden Rohres aufweist.

13. Einfrierkopf nach einem der Ansprüche 1 bis 12,
**dadurch gekennzeichnet, daß** wenigstens in die eine Vertiefung (7, 8) ein Einsatzstück (29 bis 31) einsetzbar ist, das einen vorzugsweise bügelförmig ausgebildeten Aufnahmeteil (32 bis 34) für Rohre (9, 10) aufweist, die einen größeren Durchmesser haben als die in die Vertiefung (7, 8) einsetzbaren Rohre.

14. Einfrierkopf nach Anspruch 13,
**dadurch gekennzeichnet, daß** der Aufnahmeteil (32 bis 34) einen vorzugsweise zwei Bodenabschnitte unterschiedlicher Krümmung aufweisenden Boden (36 bis 38) aufweist, der wenigstens einen teilkreisförmig gekrümmten Bodenabschnitt aufweist.

15. Einfrierkopf nach Anspruch 13 oder 14,
**dadurch gekennzeichnet, daß** das Einsatzstück (29 bis 31) einen Steckteil (35) aufweist, der in die Vertiefung (7, 8) eingreift, und daß vorteilhaft die Außenseite (39 bis 41) des Steckteiles (35) an die Innenseite der Vertiefung (7, 8) angepaßt ist.

## Claims

1. Freezing head for pipe freezing devices with at least one depression (7, 8) provided at an outer side for the reception of a tube section (9, 10) and with at least one connection (19) for the inlet of a coolant into at least one cavity (27, 28) of the freezing head, whereby the freezing head comprises at another outer side at least one further depression (7, 8),
**characterized in that** the bottom (11, 14) of the depressions (7, 8) comprises respectively at least two bottom portions (12, 13; 15, 16) which have different bend radii.

2. Freezing head according to claim 1,
**characterized in that** the bottom portions (12, 13; 15, 16) merge into one another.

3. Freezing head according to claim 1 or 2,
**characterized in that** the one bottom portion (12, 15) is provided centrally within the depressions (7, 8).

4. Freezing head according to one of the claims 1 to 3,
**characterized in that** the other bottom portion (13, 16) joins on both sides to the central bottom portion (12, 15) and advantageously consists of two areas separated by the central bottom portion (12, 15), the areas being positioned on an imaginary arc or cylinder wall.

5. Freezing head according to claim 3 or 4,
**characterized in that** the central bottom portion (12, 15) has a smaller bend radius than the other bottom portion (13, 16).

6. Freezing head according to one of the claims 1 to 5,
**characterized in that** the freezing head comprises at two outer sides, situated opposite to one another, respectively a depression (7, 8).

7. Freezing head according to one of the claims 1 to 6,
**characterized in that** the freezing head comprises a shell (1) with a bottom (2), along the rim of which is provided a side wall (3), transversely protruding, advantageously comprising the depressions (7, 8).

8. Freezing head according to claim 7,
**characterized in that** the surrounding side wall (3) delimits the cavity (27, 28).

9. Freezing head according to one of the claims 1 to 8,
**characterized in that** the cavity comprises two chambers (27, 28), which are at least partially separated from one another by a transversal web (21), advantageously projecting from the bottom (2) of the shell (1 ).

10. Freezing head according to claim 9,
**characterized in that** the transversal web (21) terminates with a distance from a cap (4), which closes the cavity (27, 28).

11. Freezing head according to claim 10,
**characterized in that** from the inner side of the cap (4) project two webs (24, 25), which overlap the transversal web (21) within a distance and that a labyrinth-like passage (26) is formed advantageously between the transversal web (21) and the webs (24, 25) of the cap (4).

12. Freezing head according to one of the claims 9 to 11,
**characterized in that** the transversal web (21), extending advantageously between the depressions (7, 8), situated opposite to one another, comprises an opening (22) for the passage of a tube, feeding the coolant.

13. Freezing head according to one of the claims 1 to 12,
**characterized in that** an insertion piece (29 to 31) is insertable into at least the one depression (7; 8), which comprises a receiving portion (32 to 34) for tubes, preferably strap-shaped, which have a bigger diameter than the tubes, which can be inserted into the depression (7, 8).

14. Freezing head according to claim 13,
**characterized in that** the receiving portion (32 to 34) comprises a bottom (36 to 38), preferably having two bottom portions with different curvature, the bottom comprising at least one, reference-circle shaped bent bottom portion.

15. Freezing head according to claim 13,
**characterized in that** the insertion piece (29 to 31) comprises a plug portion (35), which engages into the depression (7, 8) and that advantageously the outside (39 to 41) of the plug portion (35) is adapted to the inside of the depression (7, 8).

## Revendications

1. Tête de congélation pour dispositifs de congélation de tuyaux, comprenant au moins un renfoncement (7, 8) prévu sur un côté extérieur pour recevoir un tronçon de tuyau (9, 10) et au moins un raccord (19) pour l'apport d'un agent réfrigérant dans au moins une cavité (27, 28) de la tête de congélation, la tête de congélation présentant sur un autre côté extérieur au moins un autre renfoncement (7, 8), **caractérisée en ce que** le fond (11, 14) des renfoncements (7, 8) présente respectivement au moins deux tronçons de fond (12, 13 ; 15, 16) qui ont des rayons de courbure différents.

2. Tête de congélation selon la revendication 1, **caractérisée en ce que** les tronçons de fond (12, 13 ; 15, 16) se transforment l'un dans l'autre.

3. Tête de congélation selon l'une ou l'autre des revendications 1 et 2, **caractérisée en ce que** l'un des tronçons de fond (12, 15) est prévu dans les renfoncements (7, 8) au centre.

4. Tête de congélation selon l'une des revendications 1 à 3, **caractérisée en ce que** l'autre tronçon de fond (13, 16) vient se raccorder des deux côtés au tronçon de fond central (12, 15) et se compose avantageusement de deux régions séparées par le tronçon de fond central (12, 15), lesquelles sont disposées sur un arc de cercle ou une enveloppe de cylindre imaginaire.

5. Tête de congélation selon l'une ou l'autre des revendications 3 et 4, **caractérisée en ce que** le tronçon de fond central (12, 15) a un plus petit rayon de courbure que l'autre tronçon de fond (13, 16).

6. Tête de congélation selon l'une des revendications 1 à 5, **caractérisée en ce que** la tête de congélation présente respectivement un renfoncement (7, 8) sur deux côtés extérieurs opposés l'un à l'autre.

7. Tête de congélation selon l'une des revendications 1 à 6, **caractérisée en ce que** la tête de congélation présente une coque (1) comprenant un fond (2) le long duquel il est prévu sur le bord une paroi latérale (3) en saillie latéralement et présentant avantageusement les renfoncements (7, 8).

8. Tête de congélation selon la revendication 7, **caractérisée en ce que** la paroi latérale périphérique (3) limite la cavité (27, 28).

9. Tête de congélation selon l'une des revendications 1 à 8, **caractérisée en ce que** la cavité présente deux chambres (27, 28) séparées au moins partiellement l'une de l'autre par une barrette transversale (21) qui est avantageusement en saillie du fond (2) de la coque (1).

10. Tête de congélation selon la revendication 9, **caractérisée en ce que** la barrette transversale (21) se termine à une certaine distance d'un couvercle (4) qui ferme la cavité (27, 28).

11. Tête de congélation selon la revendication 10, **caractérisée en ce que** deux barrettes (24, 25) qui coiffent à distance la barrette transversale (21) dépassent du côté intérieur du couvercle (4) et **en ce qu'**un passage (26) en forme de labyrinthe est formé avantageusement entre la barrette transversale (21) et les barrettes (24, 25) du couvercle (4).

12. Tête de congélation selon l'une des revendications 9 à 11, **caractérisée en ce que** la barrette transversale (21) s'étendant avantageusement entre les renfoncements (7, 8) mutuellement opposés présente une ouverture (22) pour le passage d'un conduit qui apporte l'agent réfrigérant.

13. Tête de congélation selon l'une des revendications 1 à 12, **caractérisée en ce qu'**il est possible de placer au moins dans un des renfoncements (7, 8) une pièce d'insert (29 à 31) qui présente une partie de réception (32 à 34), réalisée de préférence en forme d'étrier pour des tubes (9, 10), qui ont un diamètre plus grand que des tubes pouvant être placés dans le renfoncement (7, 8).

14. Tête de congélation selon la revendication 13, **caractérisée en ce que** la partie de réception (32 à 34) comporte un fond (36 à 38) qui présente de préférence deux tronçons de fond de différente courbure et au moins un tronçon de fond dont la courbure est en forme de cercle partiel.

15. Tête de congélation selon l'une ou l'autre des revendications 13 et 14, **caractérisée en ce que** la pièce d'insert (29 à 31) présente une partie emboîtable (35) qui s'engage dans le renfoncement (7, 8) et **en ce que** le côté extérieur (39 à 41) de la partie emboîtable (35) est adapté avantageusement au côté intérieur du renfoncement (7, 8).
